(19) Europäisches Patentamt
European Patent Office
Office européen des brevets

(11) EP 2 026 589 B1

(12) EUROPEAN PATENT SPECIFICATION

(45) Date of publication and mention of the grant of the patent:
23.02.2011 Bulletin 2011/08

(51) Int Cl.:
H04N 13/00 (2006.01)　　B25J 9/16 (2006.01)
G05B 19/401 (2006.01)

(21) Application number: 07114176.6

(22) Date of filing: 10.08.2007

(54) **Online calibration of stereo camera systems including fine vergence movements**

Online-Kalibrierung von Stereokamerasystemen mit Feinvergenzbewegungen

Étalonnage en ligne des systèmes de caméra stéréo incluant des mouvements de vergence fine

(84) Designated Contracting States:
DE FR GB

(43) Date of publication of application:
18.02.2009 Bulletin 2009/08

(73) Proprietor: **Honda Research Institute Europe GmbH**
**63073 Offenbach/Main (DE)**

(72) Inventors:
• **Rodemann, Tobias**
**63065 Offenbach (DE)**

• **Joublin, Frank**
**63533 Mainhausen (DE)**
• **Dunn, Mark**
**63533 Mainhausen (DE)**

(74) Representative: **Rupp, Christian**
**Mitscherlich & Partner**
**Patent- und Rechtsanwälte**
**Sonnenstraße 33**
**80331 München (DE)**

(56) References cited:
**EP-A- 1 587 162　　GB-A- 2 168 565**
**GB-A- 2 226 923**

**Description**

The present invention generally relates to the field of stereo cameras having actuators for a self-controlled movement functionality, wherein the movement is learned using an online calibration for the mapping of desired movements to the necessary commands for the actuators.

Such an online calibration is known from EP 1587162 A1.

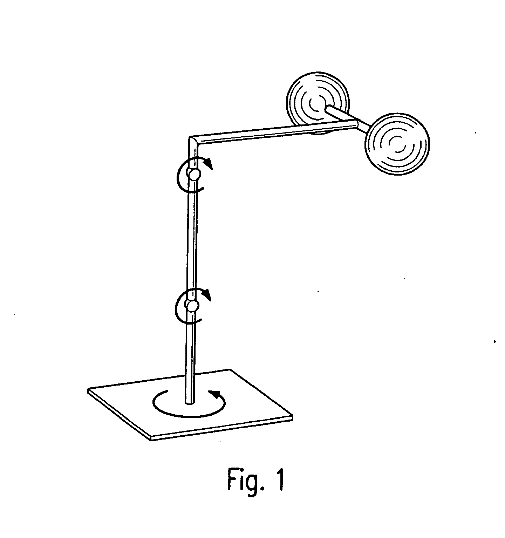

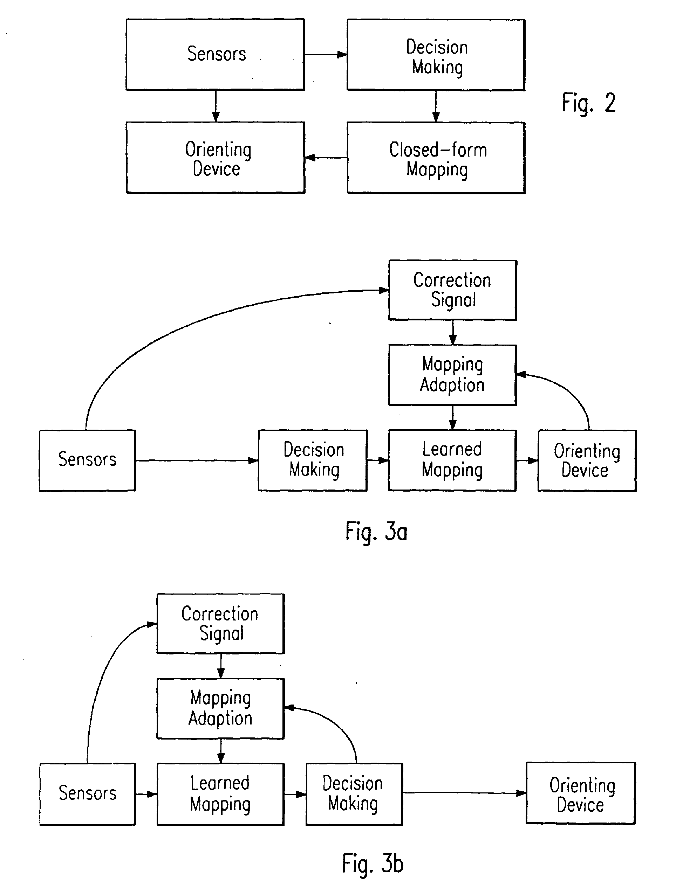

The background of the present invention is the field of stereo cameras, which shall now be explained with reference to figures 1 and 2. Figure 1 shows a stereo camera, which can be directed in several degrees-of-freedom. It is now assumed that the shown camera is to be directed such that a detected visual target present somewhere in the input space of the camera moves into the origin of the input space. Figure 2 shows a known process to calculate and carry out an action (i.e. movement of the camera) in order to achieve said object. In a first step the output of the sensor (here: camera) is evaluated to make a decision regarding a target position in the multi-dimensional input space of the sensor, which target position can e.g. be a recognised sound source. In a further step the sensor coordinates (pixels etc.) are mapped into the motor coordinates (voltages, currents, angles etc.) using a predefined look-up table or analytical function in order to generate the actuator (motor) command necessary for the before decided new orientation of the camera.

Typical examples for sensor means providing explicit orientation information are e.g. an image sensor array, a radar image sensor array or a chemical receptor sensor array. A typical sensor means providing implicit orientation information is the use of stereo microphones to localise a sound source. Sensor means providing implicit orientation information require an extraction of the orientation information before said orientation information can be used.

Robots comprising sensors, which supply orientation information, are known as orienting robots. It is a disadvantage of such orienting robots that they frequently require calibration to work properly. Such a calibration must be done after every change in system geometry (e.g. when the physical relation between a sensor and an actuator of the robot is changed), after every modification (e.g. lens replacement, a motor modification) and if the robot is used in a changing or uncontrolled environment.

In certain environments a manual calibration by a user is not possible or desired (e.g. if the robot is a probe sent to a foreign planet). Furthermore, in case of frequent changes in system geometry, of frequent modification of the sensors or motors or an uncontrolled environment frequent calibration is very time consuming and laborious.

Therefore, self-calibrating orienting robots have been proposed.

Such self-calibrating orienting robots usually use calibration scenarios, mathematical analysis or parameter/hardware tuning with human supervision.

All of the above calibration techniques suffer from one of the following disadvantages:

The use of calibration scenarios normally requires the return of actuators of the robot to reference points. Therefore, calibration in a new and/or uncontrolled environment frequently is not possible. Moreover, said calibration by using reference points frequently is not sufficient to solve the problem of non-linearity of motor responses.

Calibration by mathematical analysis has the drawback that several implicit assumptions are necessary which frequently result in strong simplifications. Often only a subset of variations is taken into account. Thus, the accuracy of said calibration method usually is insufficient. Furthermore, calibration by mathematical analysis frequently is not applicable for online calibration due to the high complexity. Finally, the analysis has to be redefined for any voluntary or involuntary change of the set-up.

Parameter/hardware tuning with human supervision has the drawback that it requires human expert intervention. Therefore, this calibration solution is not suitable for autonomous robots. Moreover, this calibration technique usually is very time consuming and highly depends on the experience of the expert.

Therefore, it is an object of the present invention to further develop the online calibration for an adaptive stereo camera system with vergence. Following the definition of Cassin B, Solomon S. Dictionary of Eye Terminology. Gainsville, Florida: Triad Publishing Company, 1990, "vergence" is the simultaneous movement of both eyes in opposite directions to obtain or maintain single binocular vision.

The above objects are achieved by means of the features of the independent claims. The dependent claims develop further the central idea of the present invention.

The present invention relates to a technique for increasing the robustness of an adaptive stereo camera system with vergence by allowing the online calibration of the target fixation movement of stereo cameras including vergence control. The simple extension of the prior art patent would be to learn the control of both camera bearings individually. However, for stereo vision it is required that both cameras focus on the same target. (Especially for a camera/lens with non-homogeneous resolution (e.g. fovea-like) it is essential to have a high precision synchronous focusing of the two cameras on the same target. Such a camera/lens would actually help to focus accurately). Learning this integrated orienting and vergence motion in an unsupervised, online fashion is the key proposal of this patent.

In the following detailed description, the present invention is explained by reference to the accompanying drawings, in which like reference characters refer to like parts throughout the views wherein

Fig. 1 shows an orienting device according to the prior art;

Fig. 2 shows an orienting action calculating process according to the prior art;

Fig. 3a, 3b show schematically alternative processes according to EP 1587162 A1;

Fig. 4a, 4b illustrate different embodiments for calculating the correction signal for an adaptive learning of the mapping function;

Fig. 5 illustrates an option for accelerating the adaptation process;

Fig. 6 illustrates the introduction of confidence values in the learning process of figures 3a or 3b,

Fig. 7 shows a block diagram of the self-calibrating orienting/positioning system according to EP 1587162 A1,

Fig. 8 illustrates the pan, tilt and vergence angles of a stereo camera system according to the present invention, and

Fig. 9 shows a system-architecture (alternatively A1-A4 could be pan and tilt motors of two individual cameras).

A process known from EP 1587162 A1 shall now be explained with reference to figure 3a. Comparable to the process of figure 2, the output signal of a sensor is evaluated in order to make a decision regarding a target position of a recognised pattern in the input space of the sensor means 1, which target position is to be achieved by a pre-calculated "one-strike" action. This means that an action, i.e. a planned interaction with the real world is first set-up and then carried out in its entirety. Only after the action is completed, any differences between the originally planned action and the real-world result are evaluated and additional correction actions can be planned and carried out.

For mapping the sensor coordinates of the decided action into actuator coordinates, according to the present invention an adaptively learned mapping is used. In a first cycle of the orientation a roughly estimated or arbitrarily set mapping function is used. In at least one further cycle an improved "learned" mapping function will be used.

This approach has the advantage that in case the sensor/actuator characteristics change (wear, change of the set-up, replacement, temperature fluctuations,...), the correct sensor/actuator mapping can be automatically <u>relearned</u> via a few learning/adaptation cycles without human interference and without analytically (re-)defining the correlation between actuator and sensor coordinates.

In order to carry out the adaptive learning process, once a cycle is completed and an action is carried out, the success of the action, i.e. whether the pattern has actually been brought close to the target position, is evaluated and depending on any deviation a correction signal is generated and fed to the mapping unit in order to carry out an incremental learning step. This cycle can be repeated until the deviation between the planned action and the real-world result is smaller than a preset threshold value or can be continued indefinitely.

Note that the correction signal is generated after the action, which was meant to bring upon the desired result in one strike, has been completed.

To summarize, according to this example the action to be taken is decided in the sensor coordinates; the decision making result is then mapped to the actuator (motor) coordinates.

Figure 3b shows an alternative arrangement in which the sensor coordinates are first mapped to the actuator coordinates before carrying out the decision making process in the actuator coordinate system. This arrangement has the advantage that e.g. restrictions on the actuator coordinates (maximum ranges, speed, acceleration etc.) can be easier taken into account during the decision now taking place in the actuator coordinates.

Further on, according to the alternative arrangement according to figure 3b output signals of different, eventually heterogeneous sensors can be individually mapped into respective actuator coordinates which can then be easily combined in order to make the decision on the action to be taken on the basis on the combined actuator coordinates.

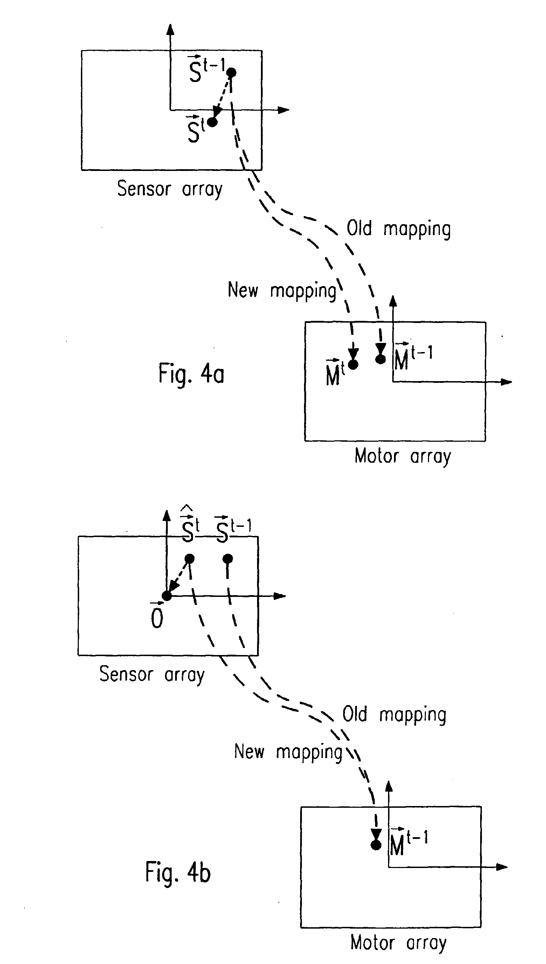

With reference to figure 4a a first embodiment of the calculation of a correction signal and the adaptation of the mapping function shall be explained. As already explained, it is the aim of the mapping to translate the coordinates of the action decided in sensor coordinates in coordinates adapted for the control of the actuator means. Consequently figure 4a shows both a diagram of the sensor array and the motor array, respectively. In the present example it is envisaged to carry out an action by which the pre-action location $\vec{S}_x^{t-1}$ is transferred to the centre of the sensor array (sensor input space). Using a pre-set mapping function it is assumed that the corresponding actuator (motor) command be $\vec{M}_x^{t-1}$. Using this motor command, however, the pre-action location $\vec{S}_x^{t-1}$ is not exactly transferred to the target position in the sensor array, but to the post-action location $\vec{S}_x^t$.

According to the present embodiment now the incremental learning adaptation of the mapping function is carried out as a linear extrapolation, i.e. the adaptively corrected motor command for the coordinate (degree-of-freedom) x and to be used for the next cycle is:

$$\vec{M}_x^{t+1} = \vec{M}_x^{t-1} + \alpha_x \left( \hat{\vec{M}}_x^t - \vec{M}_x^{t-1} \right)$$

with $\hat{\vec{M}}_x^t = \vec{M}_x^{t-1} \cdot \dfrac{\vec{S}_x^{t-1}}{\left( \vec{S}_x^{t-1} - \vec{S}_x^t \right)}$, and $\alpha_x$ being an optional parameter (being larger than or equal to 0 and smaller than or equal to 1) which controls the adaptation rate of the coordinate x.

Note that this extrapolation-type learning process can also be used for non-linear mappings. Further on, the learning process as shown in figure 4a can be applied both to the decision making strategies of figure 3a and figure 3b.

Finally, this learning process can also be used in case of a single as well as multiple stimulus-emitting sources in the input space of the sensor(s).

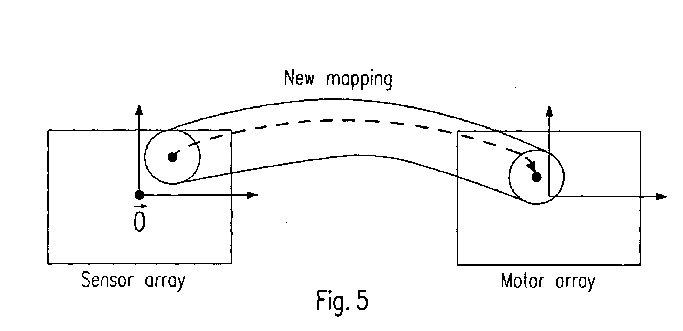

In order to accelerate the learning process (potentially slowed down by the adaptation rate parameter $\alpha_x$), more than one location can be used in each cycle. As shown in figure 5, to speed-up the convergence of the adaptation, a defined neighbourhood of a location can be used. Thereby, by making the range of the neighbourhood variable in time, it is possible to achieve a mapping function that remains plastic for the case of sudden decalibration of the system and at the same time locally stable to guarantee an accurate representation of any non-linearities.

With reference to figure 4b a second embodiment of the calculation of a correction signal and the adaptation of the mapping function shall be explained. Again, it is the aim of the mapping to translate the coordinates of the action decided in sensor coordinates in coordinates adapted for the control of the actuator means. Consequently also figure 4b shows both a diagram of the sensor array and the motor array, respectively. In the present example it is envisaged to carry out an action by which the pre-action location $\vec{S}_x^{t-1}$ is transferred to the centre of the sensor array (sensor input space). Using a pre-set mapping function it is assumed that the corresponding actuator (motor) command be

$\vec{M}_x^{t-1}$. Using this motor command, however, the pre-action location $\vec{S}_x^{t-1}$ is not exactly transferred to the target position in the sensor array, but to the post-action location $\vec{S}_x^t$. Now, according to the present second embodiment, the reference location is identified which actually has been transferred to the target position when carrying out the action as commanded by $\vec{M}_x^{t-1}$. Further on, contrary to the first embodiment, the adaptation of the mapping is carried out in the sensor space according to the following formula:

$$\vec{S}_x^t = \vec{S}_x^{t-1} + \alpha_x \left( \hat{\vec{S}}_x^{t-1} - \vec{S}_x^{t-1} \right)$$

with $\vec{S}_x^t$ being a corrected targeted post-action position for the dimension x at the time *t*,

$\vec{S}_x^{t-1}$ being the (uncorrected) targeted post-action position for the dimension *x* at the time *t-1*,

$\hat{\vec{S}}_x^{t-1}$ being the pre-action reference location for the dimension x at the time *t-1* and

$\alpha_x$ being a constant (being larger than or equal to 0 and smaller than or equal to 1) which controls the rate of adaptation for the dimension *x*.

Note that this learning process can also be used both for the learning strategies of figures 3a and 3b. It is a comparatively quick method, however, it requires a plurality of stimulus-emitting sources being present in the input space - if there is only a single stimulus-emitting source, it is obviously impossible to find the reference location as defined above.

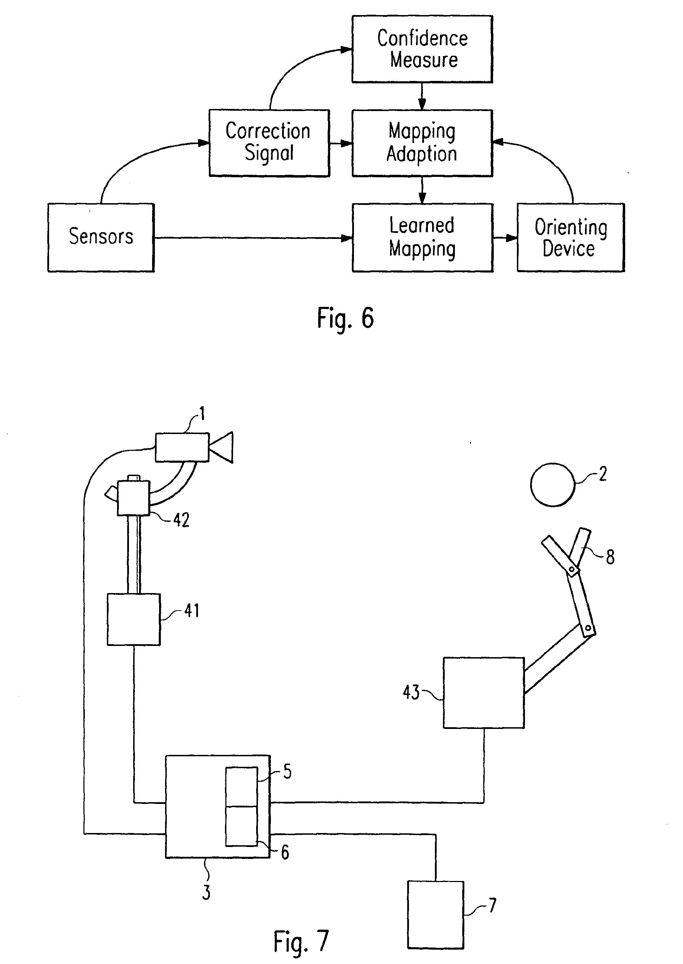

Figure 6 shows schematically that a confidence measure can be derived from the correction signal. The adaptation rate can then be modulated with the confidence measure (having a value between 0 and 1). The introduction of the confidence measure minimizes the occurrence of erroneous adaptation steps, which can take place in case of incorrect estimations of the correction signal. The correction signal is usually computed by a correlation method, in which case the correlation can be used (after normalization) as a confidence measure.

Fig. 7 schematically shows a self-calibrating orienting/positioning system according to the present invention.

The system comprises sensor means 1 for gathering information of the real world in order to localise a pattern 2 (e.g. of a recognized defined object) in the at least one-dimensional input space of the sensor means 1. Alternatively, the sensor means 1 may be a radar image sensor array, a chemical receptor sensor array or a stereo microphone for localising a sound emitted by the object 2 or any other directional sensor.

The sensor means 1 is mounted on a frame comprising actuator means 41 and 42, which are e.g. adapted to tilt and pan of the sensor means 1. In the present example said actuator means 41 and 42 can be e.g. electrical linear motors.

In consequence, the actuator means 41 and 42 are adapted to change the input space of the sensor means 1 by moving the sensor means 1 itself. Note that any planned process adapted to change the input space of the sensor means 1 by a manipulation in the real world is called an "action" within the framework of the present specification. Correspondingly "pre-action" and "post-action", respectively, designates states before and after such an action controlled by the actuator means has taken place.

Both the sensor means 1 and the actuator means 41 and 42 are connected to computing means 3.

In Fig. 7 said computing means 3 is a computer which is adapted to define a targeted post-action position information of the pattern in the input space of the sensor means 1 and to calculate a command for the actuator means 41 and 42 to move the sensor means 1. Alternatively or additionally the computing means can be adapted to calculate a command to move a manipulator 8 of a robot 43, the movement of the manipulator 8 also being an action suited to change the input space of the sensor means 1 under the control of the actuator means 41 and 42.

When calculating the command for the respective actuator means 41, 42 or the robot 43, the computing means uses pre-action position information provided by said sensor means 1, i.e. information on the position of the pattern in the input space of the sensor means 1 before the action has taken place, and a targeted post-action position information, i.e. an information representing a target position of the pattern 2 after the action has taken place. The target position can e.g. be the centre of the input space of the sensor means 1. Alternatively, particularly in case the actuator means control e.g. the manipulator arm of a robot etc., the target position can be set as the position (still in the input space of the sensor means 1) of an object to be manipulated by the robot.

The computing means 3 comprises a determining means 5 and a comparing means 6.

The determining means 5 is adapted to determine whether a post-action position information output by the sensor means 1, after an action of said actuator means 41, 42 and/or said robot 43 with said object 2 and/or said manipulator 8 by moving said sensor means 1 or by moving said manipulator 8 is completed, coincides with the targeted post-action position as defined before by the computing means 3.

If the determining means 5 determine that the post-action object-sensor position information does not match the targeted object-sensor position information, the computing means 3 are further adapted to correct the calculated command for the actuator means 41, 42 and the robot 43, respectively by using the comparison result output by the comparing means 6. The corrected command can then be used for a future action.

In order to implement the learning strategy of figure 3a, the computing means 3 is adapted to calculate a difference between the post-action object-sensor position information and the targeted post-action object-sensor position information and to automatically correct the calculate command for the actuator means 41,42,43 by using the following formula:

$$\vec{M}_x^{t+1} = \vec{M}_x^{t-1} + \alpha_x \left( \hat{\vec{M}}_x^t - \vec{M}_x^{t-1} \right) \cdot$$

with $\quad \hat{\vec{M}}_x^t = \vec{M}_x^{t-1} \cdot \dfrac{\vec{S}_x^{t-1}}{\left( \vec{S}_x^{t-1} - \vec{S}_x^t \right)} \, ,$ $\quad \vec{M}_x^{t+1} \quad$ being

the corrected command for the actuator means (41, 42, 43) for the dimension $x$ at the time $t+1$,

$\vec{M}_x^{t-1}$ being the uncorrected command for the actuator means (41, 42, 43) for the dimension $x$ at the time $t-1$, $\vec{S}_x^t$ being the post-action object-sensor position information for the dimension $x$ at the time $t$ after said actuator means (41, 42, 43) has been controlled according to the uncorrected command,

$\vec{S}_x^{t-1}$ being the targeted post-action object-sensor position information for the dimension $x$ at the time $t-1$, and $\alpha_x$ being a constant which controls the rate of adaptation for the dimension $x$.

The usage of said difference allows a correction of the calculated command for the actuator means 41, 42 and/or the robot 43 in a very accurate way since the amount of accuracy presently achieved by the command previously used to control the actuator means 41, 42 and/or the robot 43 explicitly is considered.

In order to implement the learning strategy of figure 3b, the calculation means can be adapted to calculate a difference between the targeted post-action position information and the pre-action position information by using the following formula:

$$\vec{S}_x^t = \vec{S}_x^{t-1} + \alpha_x \left( \hat{\vec{S}}_x^{t-1} - \vec{S}_x^{t-1} \right)$$

with $\vec{S}_x^t$ being an adapted targeted post-action position for the dimension x at the time $t$,

$\vec{S}_x^{t-1}$ being the targeted post-action position for the dimension *x* at the time *t-1*,

$\hat{\vec{S}}_x^{t-1}$ being the pre-action reference pattern position for the dimension *x* at the time *t-1* and $\alpha_x$ being a constant (being larger than or equal to 0 and smaller than or equal to 1) which controls the rate of adaptation for the dimension *x*.

Since said reference location is chosen by using a reference-object which is located at the targeted post-action object-sensor position information it is guaranteed that the reference-object suits best for calibrating the respective action of the actuator means 41, 42 and/or the robot 43. Furthermore, even non-linearities in motor/sensor responses can be dealt with since this calibration is not performed by using a single pre-defined reference point but by using the reference-object located at the respective targeted post-action object-sensor position information.

The corrected commands, i.e. the adaptively learned mapping function, can be stored by the computing means 3 in said storing means 7 in said command-map.

The commands stored in the command map are used by the computing means 3 to calculate any new commands for the actuator means 41, 42 and the robot 43, respectively.

By automatically comparing a post-action output of the sensor means with a pre-action output of the sensor means and using said comparison result to correct the calculated command for the actuator means the inventive method allows an auto-calibration of the orienting system and an adaptation to changing and uncontrolled environments.

Therefore, EP 1587162 A1 proposes a method of controlling an orienting system and a self-calibrating orienting system, which allows automatic calibration of the system without human intervention with high accuracy. Furthermore, the inventive method of controlling orienting system and the inventive self-calibrating orienting system is adapted to deal with non-linearities in motor/sensor responses and is suitable to be used in a changing and/or uncontrolled environment where maintenance is not possible or desired. Thus, a long-time operation of the inventive system and method without human interference is possible.

Starting from EP 1587162 A1, the present invention relates to a technique for increasing the robustness of an adaptive stereo camera system with vergence by allowing the online calibration of the target fixation movement of stereo cameras including vergence control. The simple extension of EP 1587162 A1 would be to learn the control of both camera bearings individually. However, for stereo vision it is required that both cameras focus on the same target. (Especially for a camera/lens with non-homogeneous resolution (e.g. fovea-like) it is important to have a high precision synchronous focusing of the two cameras on the same target. Such a camera/lens would actually help to focus accurately).

The invention proposes the learning of this integrated orienting and vergence motion in an unsupervised, online manner.

For the online-adaptation of sensory systems the difference in sensory inputs as a result of an orienting movement is evaluated. Through the comparison of the state before and after the internal (self-controlled) movement the necessary information for the online calibration can be extracted. For a stereo camera system with vergence it is furthermore required that after the orienting movement both cameras focus on the same target. As stated before, a high precision is required here.

Targets are identified in the stereo camera images, where in general the target appears at different image positions in the two cameras. In many realizations, the stereo cameras are (ideally) vertically aligned so that the target appears at the same y position in both images and only the x position differs.

Therefore the invention proposes to learn the mapping from two 2D image coordinates (left (xL,yL) and right (xR,yR)) of the target to pan/tilt positions for the two cameras.

In many instances the problem is simplified by assuming an ideal vertical alignment, so that yL = yR. One can also introduce the disparity d = xL-xR, which is the difference in x positions of the target in the two camera images. The disparity is known to depend on the distance of the target to the cameras (see Olivier Faugeras, Three-Dimensional Computer Vision, The MIT Press, Third Edition, 1999, pages 175,176). Then the target position in camera image coordinates is described by e.g. (xL,yL,d).

The motor commands to focus on the target can be described as deltaPanL, deltaTiltL, deltaPanR, deltaTiltR or, using the same simplification as above, by deltaPan, deltaTilt, and deltaVergence.

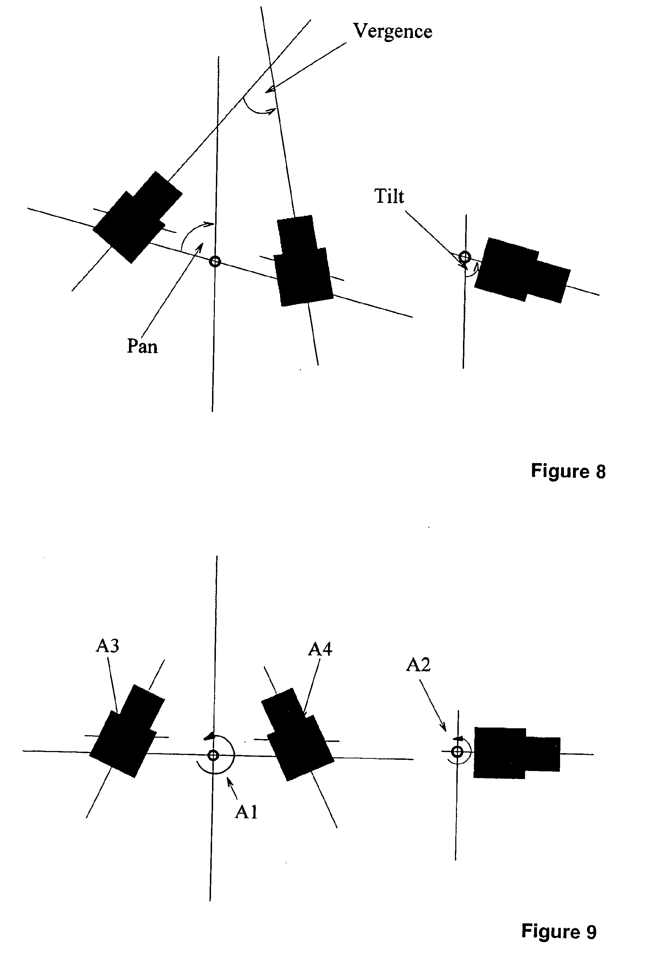

Here pan and tilt are the orientation of a parallel camera set-up (both cameras move in parallel) and vergence is the angle between the optical axes of the cameras (see Figure 8).

Because disparity and vergence are important cues to estimate the distance of an object it is important to focus both cameras on exactly the same target location. Therefore, two different camera orientation processes need to be used:

The first one is the basic orientation move that brings both cameras in the vicinity of the target (as described above with reference to figures 3 to 7 and in EP 1587162 A1 ) and the second is a vergence movement that makes both cameras converge on the same target.

Ideally, the sensory motor mapping is tuned in a way that the initial orienting movement will already achieve perfect vergence, thereby making the slower second process unnecessary. This mapping is, however, quite complicated and depends on a number of hardware and software factors (especially lens, camera type and relative camera positions). It is therefore an advantage of the present invention that the combined mapping for orienting and vergence movement is learned online.

The invention proposes an integrated orienting-vergence operation to focus on a target in the scene and then reverse check which image positions where moved into the fovea.

Now the combined orienting-vergence online calibration will be explained in greater detail:

1.) Acquire images IL1 and IR1 and decide on a target point in the left and right image to focus on. This can be done randomly or through a method like e.g. a saliency map.

2.) Map the image coordinates (either as xL, xR, yL, yR or as xL, yL, d) to motor coordinates (deltaPanL, deltaTiltL, deltaPanR, deltaTiltR or deltaPan, deltaTilt, deltaVergence), using an initially set mapping, and perform an orienting movement. Acquire images IL2 and IR2 after having carried out the orienting movement. If the map is not well calibrated the two cameras will now look at different targets in the scene. Note that in order to be general the current pan-, tilt-, and vergence angles need to be known and have to be included in the mapping.

3.) Do a fine vergence movement (as described in e.g. R. Manzotti, A. Gasteratos, G. Metta, G. Sandini, Disparity Estimation on Log-Polar Images and Vergence Control. Computer Vision and Image Understanding, Volume 83, 2001, Pages 97-117;
Alexandre Bernardino, Jose Santos-Victor, Correlation based Vergence Control using Log-polar Images, 1996;
R. Manzotti, R. Tiso, E. Grosso, G. Sandini, Primary Ocular Movements Revisited, 1994;
and acquire images ILn and IRn (n=2...m) until both cameras focus on the same target. Only the vergence angle is changed. The number of iteration steps m depends on the initial positions of the cameras and the specific vergence algorithm used.
The target of the learning is to achieve vergence with a minimum of fine-tuning.
Depending on the result of step 2) vergence might not be achievable.
In this case no adaptation is performed and the system goes back to step 1).

4.) Add all executed motor commands (deltaPanL, deltaTiltL, deltaPanR, deltaTiltR or deltaPan, deltaTilt, deltaVergence) from steps 2 and 3.

5.) Find the positions of the image patches (xLT, xRT, yLT, yRT or xLT, yLT, dT) (ILm,IRm) in the initial images (IL1,IR1) (as described in EP1587162A1)

6.) Compute a confidence for the adaptation process which consists of the confidence for the fine vergence process (correlation between left and right image) and the correlation between pre- and post-movement patches.

7.) Update the mapping with the new training example: (current vergence, current tilt, xLT, xRT, yLT, yRT) -> deltaPan, deltaTilt, deltaVergence.
The update is modulated by the confidence computed in step 6. This modulation is also known from EP 1587162 A1).

8.) Repeat 1 to 7 until a stop criterion has been reached or continue endlessly.

State of the art systems (e.g. Mike Page1, Eric Mae1, Christoph von der Malsburg, Self-calibration of the fixation movement of a stereo camera head. Autonomous robots, Volume 5, Numbers 3-4, 1998, Pages 355-367) perform an online calibration by employing a two step orienting movement, one, which is based on the learned mapping and a correction movement which is based on a crude analytical model (to be specified by the engineer).

Based on this analytical model the mapping is adapted. Furthermore, the system assumes that there is only a single target in the scene so that it is guaranteed that both cameras focus on the same object. There is also no confidence computed so that learning is very susceptible to disturbances.

The approach according to the present invention requires neither an analytical model nor a simplified environment.

Learning is based on performing arbitrary orienting motions and then converging on a common target with both cameras through the fine vergence movement.

Through the confidence computation it is ensured that only valid training sets are used. Furthermore, learning is based on exact training pairs, that is, we update the mapping without relying on interpolation.

System architecture (see Fig. 9):

The proposed invention comprises a stereo camera system S, actuators (e.g. electric motors) A1, A2, A3 and A4 that can orient the left and right camera, an actuator control system C and an adaptation system L (e.g. a standard computer). The basic system as proposed in the previous patent mentioned above is the following: Based on the sensory input from S, a target is chosen in C and the corresponding commands for focusing on the target are issued to the actuators An (n=1..4).

The performance of the system is monitored by L and if the result is unsatisfactory learning can be initiated. This adaptation is based on the difference in sensory inputs before and after the orienting movement.

## Claims

1. A method for controlling a stereo camera system, the stereo camera system comprising a stereo camera (1) and actuator means (41, 42, 43) for controlling an orienting and a vergence action of the stereo camera (1),
the method comprising the following steps:

   - (S1) Evaluating pre-action output information of the stereo camera (1) in order to detect the position of a pattern in the input space of the stereo camera (1),
   - (S2) Deciding on a targeted post-action position of said pattern (2) in the input space of the stereo camera (1),
   - (S3) Defining a command for the actuator means (41, 42, 43) by mapping any deviation of the pre-action position and the targeted post-action position in the input space coordinates of the stereo camera (1) to actuator control coordinates using a predefined mapping function,
   - (S4) Orienting the stereo camera (1) by the actuator means (41, 42, 43) according to the defined command in order to carry out an orienting action; and
   - (S5) Detecting the real post-action position of the pattern (2) in the input space of said sensor means (1),
   - (S6) Controlling the actuator means to perform a fine tuning vergence movement of the stereo camera by a number of iteration steps,
   - (S7) Calculating a correction signal on the basis of the pre-action position which has actually been moved to the targeted post-action position when carrying out the action,
   - (S8) Combining adaptation of the mapping function for the orienting and vergence control based on the correction signal and on the added executed actuator commands for the orienting and the vergence movement,
   **characterized in that**
   the vergence fine tuning comprises the steps of

      1.) acquiring a first left image (IL1) and a first right image (IR1),
      2.) determining a target point in the first left image (IL1) and the first right image (IR1) to focus on,
      3.) mapping the image coordinates of the target point to motor coordinates using an initial mapping,
      4.) performing a first movement,
      5.) acquiring another left image (IL2) and another right image (IR2) after having carried out the first movement,
      6.) determining whether the cameras of the stereo camera (1) are focused on different targets,
      7.) in case the cameras are focused on different targets

         a. performing a vergence movement wherein only the vergence angle is changed, and
         b. acquiring a new set of a left and a right image (ILn, IRn), and

      8.) performing steps 6.) to 7) b. until it is determined that the cameras focus on the same target.

2. The method of claim 1, comprising the steps of

   - recording and/or storing all executed motor commands for the vergence movement(s) as a training example, and
   - updating the mapping based on the training example,
   - modulating the update by a calculated confidence value.

3. The method of claims 1 or 2,
   **characterised in that**
   before adaptation of the mapping function, the adaptation vector is multiplied with a factor larger than or equal to 0 and smaller than or equal to 1 in order to control the adaptation rate for the mapping function.

4. The method of any one of the preceding claims,
   **characterised in that**
   the method further comprises the step of

   - computing a confidence value based on the comparison between camera patterns before and after the action was executed; and
   - modulating the adaptation vector with the confidence value such that the adaptation rate depends on the confidence value.

5. The method according to claim 4,
   wherein the confidence value is computed by adding the separately computed confidence value contributions for the vergence process, e. g. by comparing the left and right image patches, and the match between pre- and post-movement patterns, respectively.

6. The method according to any one of the preceding claims
   **characterised in that**
   the mapping function is implemented by means of a look-up table.

7. The method according to any one of the preceding claims,
**characterised in that**
in steps S 1 to S6, for each cycle, not only the position of the pattern, but also a neighbourhood in a defined range surrounding this position is used.

8. The method according to claim 7,
**characterised in that**
the range of the neighbourhood can be changed between two subsequent cycles.

9. The method according to any one of the preceding claims,
**characterised in that**
the adaptation of the mapping function is carried out in the camera input space coordinates.

10. The method according to any one of the claims 1 to 8,
**characterised in that**
the adaptation of the mapping function is carried out in the actuator coordinates.

11. A computer software product implementing a method according to any of the preceding claims when running on a computing device.

12. A self-controlled stereo camera system,
the stereo camera system comprising a stereo camera (1) consisting of cameras with non-homogeneous resolution and actuator means (41, 42, 43) for controlling an orienting and a vergence action of the stereo camera (1), adapted to carry out the method according to any one of claims 1-10.

**Patentansprüche**

1. Verfahren zur Steuerung eines Stereokamerasystems, wobei das Stereokamerasystem eine Stereokamera (1) und Aktuatoreinrichtungen (41, 42, 43) zum Steuern einer Ausrichtungs- und Vergenzaktion der Stereokamera (1) aufweist,
wobei das Verfahren die folgenden Schritte aufweist:

- (S1) Auswerten von Voraktionsausgangsinformationen der Stereokamera (1), um die Position eines Musters in dem Eingangsraum der Stereokamera (1) zu erfassen,
- (S2) Entscheiden über eine anvisierte Nachaktionsposition des Musters (2) in dem Eingangsraum der Stereokamera (1),
- (S3) Definieren eines Befehls für die Aktuatoreinrichtungen (41, 42, 43) durch Abbilden jeglicher Abweichung der Voraktionsposition und der avisierten Nachaktionsposition in den Eingangsraumkoordinaten der Stereokamera (1) auf Aktuatorsteuerungskoordinaten, unter Verwendung einer vordefinierten Abbildungsfunktion,
- (S4) Ausrichten der Stereokamera (1) durch die Aktuatoreinrichtungen (41, 42, 43) gemäß dem vordefinierten Befehl, um eine Ausrichtungsaktion auszuführen; und
- (S5) Erfassen der realen Nachaktionsposition des Musters (2) in dem Eingangsraum der Sensoreinrichtung (1),
- (S6) Steuern der Aktuatoreinrichtungen, um durch eine Anzahl von Iterationsschritten eine fein abgestimmte Vergenzbewegung der Stereokamera durchzuführen,
- (S7) Berechnen eines Korrektursignals auf der Basis der Voraktionsposition, die tatsächlich auf die avisierte Nachaktionsposition bewegt wurde, wenn die Aktion ausgeführt wird,
- (S8) Kombinieren der Anpassung der Abbildungsfunktion für die Ausrichtungs- und Vergenzsteuerung basierend auf dem Korrektursignal und auf den hinzugefügten ausgeführten Aktuatorbefehlen für die Ausrichtungs- und Vergenzbewegung,

**dadurch gekennzeichnet, dass**
die Vergenzfeinabstimmung die folgenden Schritte aufweist:

1.) Erfassen eines ersten linken Bilds (IL1) und eines ersten rechten Bilds (IR1),
2.) Bestimmen eines Zielpunkts, auf den fokussiert werden soll, in dem ersten linken Bild (IL1) und dem ersten rechten Bild (IR1),
3.) Abbilden der Bildkoordinaten des Zielpunkts auf Motorkoordinaten unter Verwendung einer Anfangsabbildung,
4.) Durchführen einer ersten Bewegung,
5.) Erfassen eines anderen linken Bilds (IL2) und eines anderen rechten Bilds (IR2) nach dem Ausführen der ersten Bewegung,
6.) Bestimmen, ob die Kameras der Stereokamera (1) auf verschiedene Ziele fokussiert sind,
7.) falls die Kameras auf verschiedene Ziele fokussiert sind,

a. Durchführen einer Vergenzbewegung, in der nur der Vergenzwinkel geändert wird, und
b. Erfassen eines neuen Satzes aus einem linken und einem rechten Bild (ILn, IRn), und

8.) Durchführen der Schritte 6.) bis 7) b., bis bestimmt wird, dass die Kameras auf das gleiche Ziel fokussieren.

2. Verfahren nach Anspruch 1, das die folgenden Schritte aufweist:

- Aufzeichnen und/oder Speichern aller ausgeführten Motorbefehle für die Vergenzbewegung(en) als ein Trainingsbeispiel, und
- Aktualisieren der Abbildung basierend auf dem Trainingsbeispiel,
- Modulieren der Aktualisierung durch einen berechneten Vertrauenswert.

3. Verfahren nach Anspruch 1 oder 2,
**dadurch gekennzeichnet, dass**
vor der Anpassung der Abbildungsfunktion der Anpassungsvektor mit einem Faktor größer oder gleich 0 und kleiner oder gleich 1 multipliziert wird, um die Anpassungsrate der Abbildungsfunktion zu steuern.

4. Verfahren nach einem der vorhergehenden Ansprüche,
**dadurch gekennzeichnet, dass**
das Verfahren ferner den folgenden Schritt aufweist:

- Berechnen eines Vertrauenswerts basierend auf dem Vergleich zwischen Kameramustern, bevor und nachdem die Aktion ausgeführt wurde; und
- Modulieren des Anpassungsvektors mit dem Vertrauenswert, so dass die Anpassungsrate von dem Vertrauenswert abhängt.

5. Verfahren nach Anspruch 4,
wobei der Vertrauenswert berechnet wird, indem die getrennt berechneten Vertrauenswertbeiträge für das Vergenzverfahren z.B. durch Vergleichen der linken und rechten Bildflecken und den Abgleich zwischen Vor- und Nachbewegungsmustern jeweils addiert werden.

6. Verfahren nach einem der vorhergehenden Ansprüche,
**dadurch gekennzeichnet**,
die Abbildungsfunktion mittels einer Nachschlagetabelle implementiert ist.

7. Verfahren nach einem der vorhergehenden Ansprüche,
**dadurch gekennzeichnet, dass**
in den Schritten S 1 bis S6 für jeden Kreislauf nicht nur die Position des Musters, sondern auch eine Nachbarschaft eines definierten Bereichs, der diese Position umgibt, verwendet wird.

8. Verfahren nach Anspruch 7,
**dadurch gekennzeichnet, dass** der Bereich der Nachbarschaft zwischen zwei aufeinanderfolgenden Zyklen geändert werden kann.

9. Verfahren nach einem der vorhergehenden Ansprüche,
**dadurch gekennzeichnet, dass**

die Anpassung der Abbildungsfunktion in den Kameraeingangsraumkoordinaten ausgeführt wird.

10. Verfahren nach einem der Ansprüche 1 bis 8,
**dadurch gekennzeichnet, dass**
die Anpassung der Abbildungsfunktion in den Aktuatorkoordinaten ausgeführt wird.

11. Computersoftwareprodukt, das ein Verfahren nach einem der vorhergehenden Ansprüche implementiert, wenn es auf einer Rechenvorrichtung abläuft.

12. Selbststeuerndes Stereokamerasystem,
wobei das Stereokamerasystem eine Stereokamera (1) aufweist, die aus Kameras mit nicht homogener Auflösung und Aktuatoreinrichtungen (41, 42, 43) zum Steuern einer Ausrichtungs- und Vergenzaktion der Stereokamera (1) besteht, das geeignet ist, das Verfahren gemäß einem der Ansprüche 1 bis 10 auszuführen.

**Revendications**

1. Procédé de commande d'un système de caméra stéréo, le système de caméra stéréo comprenant une caméra stéréo (1) et des moyens d'actionnement (41, 42, 43) pour commander une action d'orientation et de vergence de la caméra stéréo (1),
le procédé comprenant les étapes suivantes :

- (S1) évaluation des informations de sortie d'avant action de la caméra stéréo (1) afin de détecter la position d'un motif dans l'espace d'entrée de la caméra stéréo (1),
- (S2) décision sur une position d'après action ciblée dudit motif (2) dans l'espace d'entrée de la caméra stéréo (1),
- (S3) définition d'une commande pour les moyens d'actionnement (41, 42, 43) en mappant un quelconque écart de la position d'avant action et de la position d'après action ciblée dans les coordonnées de l'espace d'entrée de la caméra stéréo (1) sur les coordonnées de commande de l'actionneur au moyen d'une fonction de mappage prédéfinie,
- (S4) orientation de la caméra stéréo (1) grâce aux moyens d'actionnement (41, 42, 43) selon la commande définie afin de réaliser une action d'orientation ; et
- (S5) détection de la position d'après action réelle du motif (2) dans l'espace d'entrée desdits moyens de détection (1),
- (S6) commande des moyens d'actionnement pour réaliser un mouvement de vergence avec réglage précis de la caméra stéréo au moyen d'un nombre d'étapes d'itérations,
- (S7) calcul d'un signal de correction sur la base de la position d'avant action qui a réellement été déplacée vers la position d'après action ciblée lors de la réalisation de l'action,

- (S8) combinaison de l'adaptation de la fonction de mappage pour la commande d'orientation et de vergence sur la base du signal de correction et des commandes de l'actionneur exécutées ajoutées pour le mouvement d'orientation et de vergence,

**caractérisé en ce que**

le réglage précis de la vergence comprend les étapes consistant à :

1) acquérir une première image gauche (IL1) et une première image droite (IR1),
2) déterminer un point de cible dans la première image gauche (IL1) et la première image droite (IR1) sur lequel se focaliser,
3) mapper les coordonnées d'image du point cible sur les coordonnées de moteur au moyen d'un mappage initial,
4) effectuer un premier mouvement,
5) acquérir une autre image gauche (IL2) et une autre image droite (IR2) après avoir réalisé le premier mouvement,
6) déterminer si les caméras de la caméra stéréo (1) sont focalisées sur des cibles différentes,
7) dans le cas où les caméras sont focalisées sur des cibles différentes

a. effectuer un mouvement de vergence dans lequel seul l'angle de vergence est modifié, et

b. acquérir un nouvel ensemble d'une image gauche et droite (ILn, IRn), et

8) effectuer les étapes 6) à 7)b. jusqu'à ce que l'on détermine que les caméras sont focalisées sur la même cible.

2. Procédé selon la revendication 1, comprenant les étapes consistant à

- enregistrer et/ou stocker l'ensemble des commandes moteur exécutées pour le(s) mouvement(s) de vergence en tant qu'exemple pratique, et
- mettre à jour le mappage sur la base de l'exemple pratique,
- moduler la mise à jour grâce à une valeur de confiance calculée.

3. Procédé selon la revendication 1 ou 2,
**caractérisé en ce que**
avant l'adaptation de la fonction de mappage, le vecteur d'adaptation est multiplié par un facteur supérieur ou égal à 0 et inférieur ou égal à 1 afin de contrôler le taux d'adaptation de la fonction de mappage.

4. Procédé selon l'une quelconque des revendications précédentes,
**caractérisé en ce que**
le procédé comprend en outre l'étape consistant à

- calculer la valeur de confiance sur la base de la comparaison entre les motifs de caméra avant et après que l'action a été exécutée ; et
- moduler le vecteur d'adaptation avec la valeur de confiance de telle sorte que le taux d'adaptation dépend de la valeur de confiance.

5. Procédé selon la revendication 4,
dans lequel la valeur de confiance est calculée en ajoutant les contributions de la valeur de confiance calculée séparément pour le procédé de vergence, par exemple, en comparant les pièces d'image gauche et droite et la concordance entre les motifs avant et après mouvement, respectivement.

6. Procédé selon l'une quelconque des revendications précédentes,
**caractérisé en ce que**
la fonction de mappage est mise en oeuvre au moyen d'une table de conversion.

7. Procédé selon l'une quelconque des revendications précédentes,
**caractérisé en ce que**
dans les étapes S1 à S6, pour chaque cycle, non seulement la position du motif, mais également un voisinage dans une plage définie entourant cette position sont utilisés.

8. Procédé selon la revendication 7,
**caractérisé en ce que**
la zone du voisinage peut être modifiée entre deux cycles consécutifs.

9. Procédé selon l'une quelconque des revendications précédentes,
**caractérisé en ce que**
l'adaptation de la fonction de mappage est réalisée dans les coordonnées de l'espace d'entrée de la caméra.

10. Procédé selon l'une quelconque des revendications 1 à 8,
**caractérisé en ce que**
l'adaptation de la fonction de mappage est réalisée dans les coordonnées de l'actionneur.

11. Produit logiciel informatique mettant en oeuvre un procédé selon l'une des revendications précédentes lorsqu'il est exécuté sur un dispositif informatique.

**12.** Système de caméra stéréo à commande automatique,

le système de caméra stéréo comprenant une caméra stéréo (1) constituée de caméras à résolution non homogène et de moyens d'actionnement (41, 42, 43) pour commander une action d'orientation et de vergence de la caméra stéréo (1), conçu pour réaliser le procédé selon l'une quelconque des revendications 1 à 10.

Fig. 1

Sensors → Decision Making

Sensors → Orienting Device

Decision Making → Closed-form Mapping

Closed-form Mapping → Orienting Device

Fig. 2

Correction Signal

Mapping Adaption

Sensors → Decision Making → Learned Mapping → Orienting Device

Fig. 3a

Correction Signal

Mapping Adaption

Sensors → Learned Mapping → Decision Making → Orienting Device

Fig. 3b

Fig. 4a

Fig. 4b

New mapping

Sensor array

$\vec{0}$

Fig. 5

Motor array

Fig. 6

Fig. 7

Vergence

Tilt

Pan

**Figure 8**

A3　　　A4　　　A2

A1

**Figure 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1587162 A1

**Non-patent literature cited in the description**

- **CASSIN B ; SOLOMON S.** Dictionary of Eye Terminology. Triad Publishing Company, 1990
- **Olivier Faugeras.** Three-Dimensional Computer Vision. The MIT Press, 1999, 175, 176
- **R. MANZOTTI ; A. GASTERATOS ; G. METTA ; G. SANDINI.** *Disparity Estimation on Log-Polar Images and Vergence Control. Computer Vision and Image Understanding,* 2001, vol. 83, 97-117
- **ALEXANDRE BERNARDINO ; JOSE SANTOS-VICTOR.** *Correlation based Vergence Control using Log-polar Images,* 1996
- **R. MANZOTTI ; R. TISO ; E. GROSSO ; G. SANDINI.** *Primary Ocular Movements Revisited,* 1994
- **MIKE PAGE1 ; ERIC MAE1 ; CHRISTOPH VON DER MALSBURG.** *Self-calibration of the fixation movement of a stereo camera head. Autonomous robots,* 1998, vol. 5 (3-4), 355-367